# EUROPEAN PATENT APPLICATION

(11) **EP 1 270 965 A2**
(43) Date of publication of application: **02.01.2003**
(21) Application number: 02013708.9
(22) Date of filing: 20.06.2002
(51) Int. Cl.: F16C 3/02

(54) **Yoke, power transmission shaft, and method for manufacturing yoke**

(30) Priority: 21.06.2001 JP 2001188064
(71) Applicant: Kabushiki Kaisha Toyota Jidoshokki, Kariya-shi, Aichi-ken (JP)
(72) Inventor: Nonogaki, Yasunori, Kariya-shi, Aichi-ken (JP)
(74) Representative: Leson, Thomas Johannes Alois, Dipl.-Ing.

(57) **Abstract**

A yoke (3) is secured to the inner surface of an FRP pipe (2). The yoke (3) has a first end and a coupling portion (3a) is located on the first end. The coupling portion (3a) has a peripheral surface and is secured to the inner surface of the pipe (2). A serration (4) is formed on the peripheral surface of the coupling portion (3a). The serration (4) has teeth (4a) that can form grooves, which axially extend along the inner surface of the pipe (2) when securing the yoke (3) to the pipe (2). Recesses (5a) are continuously formed on the vertex of each tooth (4a) in the longitudinal direction.

## Description

The present invention relates to a yoke, a power transmission shaft used with the yoke, and a manufacturing method of the yoke. More specifically, the present invention pertains to a yoke used with a power transmission shaft, which has a pipe made of fiber-reinforced plastic (FRP) as the main body and is used, for example, as a vehicular propeller shaft, and to a method for manufacturing the yoke.

Weight reduction of vehicle parts has been pursued to improve fuel economy of automobiles. For example, fiber-reinforced plastic (FRP) is used instead of metal for shafts such as a propeller shaft. In a case with propeller shafts, FRP has been applied for forming the shaft portion (main body). In this case, yokes, which form part of universal joint, or other parts (such as splined shaft) for transmitting drive force are secured to the ends of the propeller shaft. A pipe formed by a filament winding method is applied as the shaft portion made of FRP.

The FRP pipe and the yoke are commonly secured by serrations (see Japanese Laid-Open Patent Publication No. 5-139170).

A serration is formed on the peripheral surface of a portion of a yoke that is coupled to the FRP pipe. The outer diameter of the serration is larger than the inner diameter of the end portion of the FRP pipe. The coupling portion of the yoke is press-fitted into the FRP pipe. Thus, the teeth of the serration form grooves on the inner circumferential surface of the FRP pipe. The engagement of the teeth and the grooves provide coupling strength for the yoke and the pipe to be integrally rotated.

Japanese Laid-Open Patent Publication No. 2000-120649 discloses a structure as shown in Figs. 4(a) and 4(b). According to the above publication, a serration 42 is formed on the peripheral surface of a coupling portion 41a of a yoke 41. The serration 42 is separated into three annular portions in the axial direction. The coupling portion 41a of the yoke 41 is press-fitted into the inner surface of the end portion of a pipe 40 made of FRP. The serration 42 includes two annular portions 42b having no teeth 42a in the longitudinal direction. Thus, portions that have teeth 42a and portions that have no teeth 42a are alternately located in the pipe 40.

The FRP pipe and the coupling portion of the yoke are required to maintain the transmission torque and minimize damage applied to the FRP pipe when press-fitting the yoke into the FRP pipe. Therefore, the force applied during press-fitting (press-fitting force) needs to be minimized.

To allow time for activating safety devices such as an air bag, a propeller shaft that can be compressed in the axial direction or broken at a collision of a vehicle has been proposed for gently absorbing great impact generated at the collision. According to this art, when the impact applied to the propeller shaft in the axial direction exceeds a predetermined level, a yoke is further press-fitted into the pipe by the impact, thus compressing the propeller shaft in the axial direction or breaking the propeller shaft. In this case also, the yoke is preferably press-fitted into the pipe with a small press-fitting force.

However, the teeth of the serration extend in the axial direction in a uniform shape. This increases the frictional resistance generated when the teeth slide along the grooves, which are formed on the inner surface of the pipe. Also, the cutting dust of the FRP, which is generated when the grooves are formed, is caught between the teeth and the groove. This also increases the frictional resistance.

According to the structure disclosed in the Publication No. 2000-120649, the serration 42 includes portions that have teeth 42a and portions that have no teeth 42a in the longitudinal direction. Thus, the frictional resistance during press-fitting is small. However, since there are portions that have no teeth 42a, the coupling portion needs to be elongated to maintain the required transmission torque. This increases the weight of the yoke.

Accordingly, it is a first objective of the present invention to provide a yoke that minimizes the press-fitting force required to secure the yoke to a pipe made of FRP with a serration while forming grooves in the pipe and that maintains a required transmission torque without elongating the coupling portion.

A second objective of the present invention is to provide a power transmission shaft that minimizes the force required to press-fit a yoke into a pipe made of FRP and that maintains a required transmission torque without elongating the portion that is coupled to the yoke.

A third objective of the present invention is to provide a method for manufacturing a yoke with high productivity.

To achieve the above objectives, the present invention provides a yoke secured to the inner surface of an FRP pipe. The yoke has first and second ends. The yoke includes a coupling portion located on the first end. The coupling portion has a peripheral surface and is secured to the inner surface of the pipe. A serration is formed on the peripheral surface of the coupling portion. The serration has teeth, which form grooves that extend axially along the inner surface of the pipe when the yoke is secured to the pipe. A plurality of recesses is formed on the vertex of each tooth in the longitudinal direction.

The present invention also provides a power transmission shaft, which includes a FRP pipe and a pair of yokes. Each yoke is secured to one of the ends of the FRP pipe. Each yoke has a first end and a second end and includes a coupling portion located on the first end. The coupling portion has a peripheral surface and is secured to the inner surface of the pipe. A serration is formed on the peripheral surface of the coupling portion. The serration has teeth, which form grooves that extend axially along the inner surface of the pipe when the yoke is secured to the pipe. A plurality of recesses is continuously formed on the vertex of each tooth in the longitudinal direction.

A further aspect of the present invention is a method for manufacturing a yoke having a coupling portion. A serration is formed on the peripheral surface of the coupling portion. The serration includes teeth, which form grooves that extend axially along the inner surface of an FRP pipe. The manufacturing method includes forming recesses at the vertex of each tooth in the longitudinal direction simultaneously with the teeth using a topping hob.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1(a) is a side view, with a part cut away, illustrating a yoke according to a first embodiment of the present invention;
Fig. 1(b) is an enlarged partial front view illustrating the yoke shown in Fig. 1(a).
Fig. 1(c) is a cross-sectional view taken along line 1c-1c in Fig. 1(b) illustrating teeth of a serration;
Fig. 1(d) is an enlarged partial view illustrating the yoke shown in Fig. 1(b);
Fig. 2(a) is a diagrammatic cross-sectional view illustrating a propeller shaft;
Fig. 2(b) is an enlarged partial cross-sectional view illustrating a coupling portion of the serration and a pipe;
Figs. 3(a) and 3(b) are enlarged cross-sectional views illustrating a yoke according to further embodiments of the present invention;
Fig. 4(a) is a side view, with a part cut away, illustrating the relationship between a pipe and a yoke according to a prior art; and
Fig. 4(b) is a partial cross-sectional view illustrating a coupling portion of the yoke shown in Fig. 4(a).

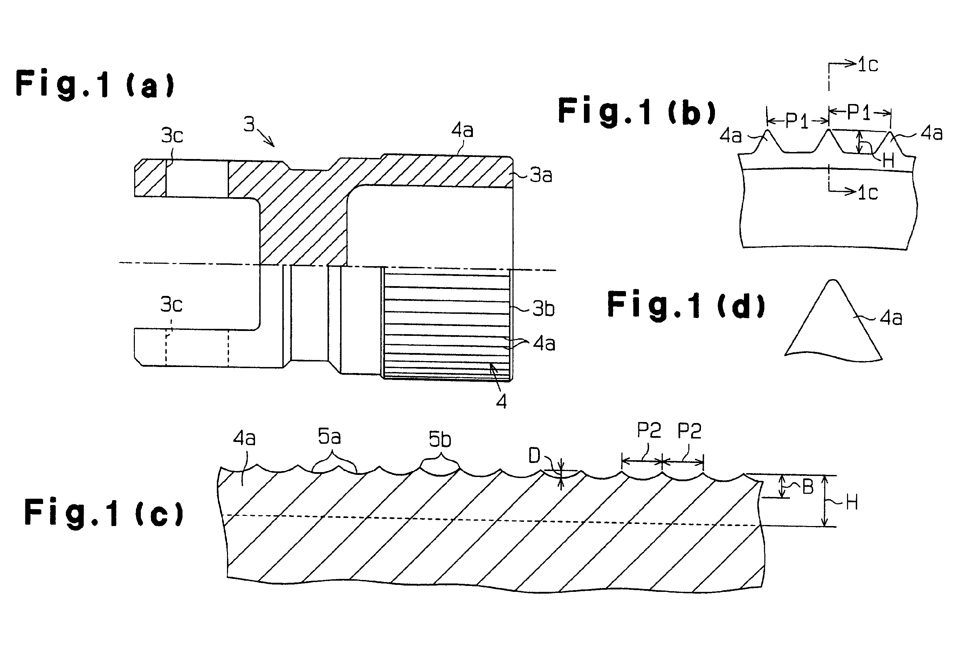

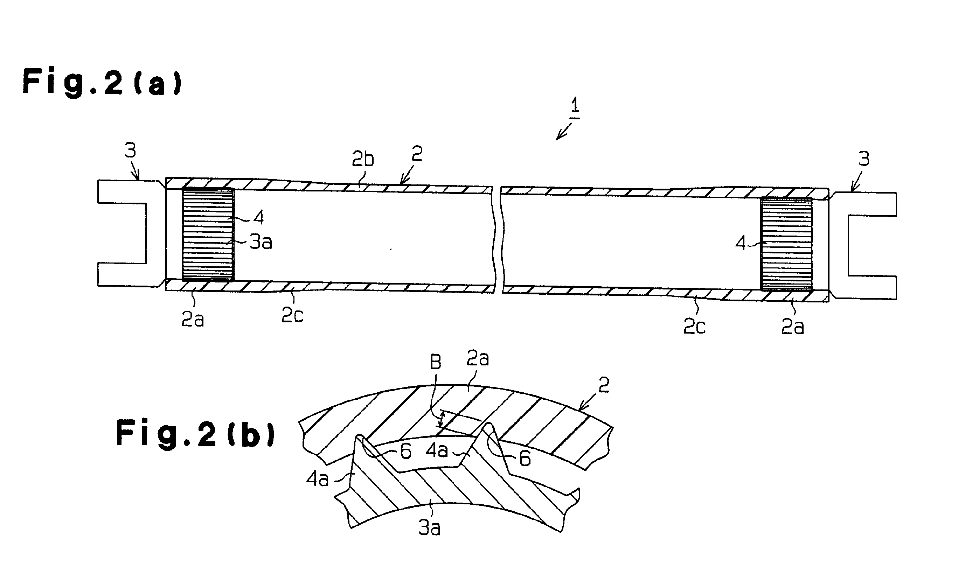

A vehicular propeller shaft according to one embodiment of the present invention will now be described with reference to Figs. 1(a), 1(b), 1(c), 1(d), 2(a), and 2(b).

As shown in Fig. 2(a), a power transmission shaft, which is the propeller shaft 1 in this embodiment, includes a pipe 2, which is made of FRP, and two metal yokes 3, each of which is secured to one of the ends of the pipe 2. Each yoke 3 has a coupling portion 3a. The pipe 2 has two joint sections 2a, each of which is located on one of the ends of the pipe 2. The coupling portion 3a of each yoke 3 is press-fitted in one of the joint sections 2a of the pipe 2 and secured by a serration. Each yoke 3 forms a part of a universal joint. The cross-sections of the pipe 2 and the coupling portion 3a of each yoke 3 are circular.

The joint sections 2a of the pipe 2 are thick. Each joint section 2a has a tapered portion 2c. Each tapered portion 2c is thinnest on the side close to a main body 2b of the pipe 2 and gradually becomes thicker toward the corresponding end. The pipe 2 is made by filament winding method. The reinforcing fibers of the pipe 2 are carbon fibers. The matrix resin is epoxy resin. That is, a fiber bundle is wound about a mandrel (core) to form a pipe. The fiber-impregnated resin is then heated, which hardens the resin. After the resin is hardened, the mandrel is removed to form the pipe 2.

The reinforcing fiber of the pipe 2 forms a fiber lamination, which includes helical layers and hoop layers. The helical layers are formed by winding the reinforcing fiber about the pipe 2 at a predetermined pitch such that the angle (winding angle) between the fiber and the axial direction of the pipe 2 is at a predetermined value. The winding angle of the hoop layers is substantially 90 degrees. The helical layers and the hoop layers are not distinguished in Figs. 1 and 2.

The winding angle of the helical layers is set to a predetermined value, which is less than or equal to 45 degrees, to satisfy the characteristics required when the pipe 2 is installed in a vehicle. The examples of the above characteristics are the bending characteristics, the torsional characteristics, and the vibration characteristics. The winding angle is set to approximately plus or minus 10 degrees in the preferred embodiment to maintain the twist rigidity and the bending rigidity of the propeller shaft 1. The hoop layers are only formed at the joint sections 2a of the pipe 2 and arranged between the helical layers.

Since the yokes 3 are identical, the structure of one of the yokes 3 will be described. The coupling portion 3a is formed on one end (first end) of the yoke 3, which is press-fitted in the pipe 2. The coupling portion 3a includes a serration 4 that has teeth 4a extending parallel to the axial direction of the yoke 3. A bore 3c is formed on the other side (second end) of the yoke 3 for attaching a universal joint (such as a cruciform joint).

As shown in Figs. 1(b) and 2(b), the teeth 4a of the serration 4 are formed at a predetermined pitch P1 in the circumferential direction. The cross-section of each tooth is substantially triangular. As shown in Fig. 1(d), the vertex of each tooth 4a is chamfered to form an arc. A tapered portion 3b is formed on the distal end (right side as viewed in Fig. 1(a)) of the coupling portion 3a of the yoke 3.

As shown in Fig. 1(c), several recesses 5a are formed on the vertex of each tooth 4a in the longitudinal direction of the tooth 4a (the direction along the length of the tooth). For purposes of explanation, projecting portions formed by adjacent recesses 5a will be referred to as projections 5b. In the preferred embodiment, the recesses 5a and the projections 5b are shaped like saw-teeth. The depth of the recesses 5a is less than the dimension B of the part of the teeth 4a that cuts into the inner circumferential surface of the pipe 2. For example, the height H (see Fig. 1(b) and 1(c)) of the teeth 4a is less than or equal to 1mm, the depth D (see Fig. 1(c)) of the recesses 5a is approximately 0.01 to 0.1mm, the dimension B of the part of the teeth 4a that cuts into the inner circumferential surface is 0.05 to 0.5mm, and the pitch P2 (see Fig. 1(c)) of the recesses 5a and the projections 5b are approximately 1 to 5mm. The depth D of the recesses 5a is preferably 1 to 5% of the pitch P2 of the recesses 5a.

The serration 4 of the yoke 3 is manufactured using a topping hob. Compared to a case when a standard hob is used, the use of the topping hob allows processing the vertex, or the tip, of the teeth 4a. Furthermore, the tip of the teeth 4a can be made narrow. The topping hob can also cut the teeth 4a and process the recesses 5a in one procedure forming tooth tips, which are shaped like saw-teeth as shown in Fig. 1(c). That is, when processing the teeth 4a, the recesses 5a are simultaneously formed on the vertex of the teeth. Thus, each tooth 4a includes the recesses 5a and the projections 5b, which are alternately and continuously arranged on the vertex. To increase the number of recesses and projections, the diameter of the topping hob is decreased. When using the topping hob with the same diameter, the depth of the recesses 5a is increased by increasing the feed pitch of the hob. The depth of the recesses 5a can be adjusted in a range between 0.01 to 0.1mm by changing the feed pitch of the hob a range between approximately 1 to 5mm.

A method for securing the yokes 3 to the FRP pipe 2 will now be described. To secure the yokes 3 to the pipe 2 as shown in Fig. 2(a), the pipe 2 is fixed with a jig and the axis of each yoke 3 is aligned with the axis of the pipe 2. Then, the serration 4 of each yoke 3 is press-fitted in one of the ends of the pipe 2 with a tool. As each serration 4 is press-fitted, the corresponding teeth 4a form serration grooves 6 (see Fig. 2(b)) on the inner circumferential surface of the pipe 2 extending in the axial direction.

The press-fitting force is the sum of the force required for the tips of the serration to form the serration grooves 6 cutting into the inner surface of the pipe 2 and the frictional force between the serration grooves 6 and the teeth 4a. In a case when the teeth 4a are axially formed in a uniform shape, the contact area between the serration grooves 6 and the teeth 4a is large. However, the recesses 5a and the projections 5b are formed on the vertex of each tooth 4a. Therefore, the contact area between the serration grooves 6 and the teeth 4a is decreased compared with the above case. As a result, the frictional force between the serration groves 6 and the teeth 4a decreases, which then decreases the press-fitting force.

When the serration grooves 6 are formed in the FRP pipe 2, cutting dust is generated. The frictional resistance increases if the FRP cutting dust enters between the teeth 4a and the wall of the serration grooves 6. However, the recesses 5a and the projections 5b are continuously formed on the vertex of each tooth 4a in the longitudinal direction. Therefore, when the serration 4 is press-fitted in the FRP pipe 2 forming serration grooves 6, the cutting dust is accommodated in the recesses 5a. Therefore, the cutting dust does not easily enter the space between the wall of the serration grooves 6 and the teeth 4a, thus reducing the frictional resistance. As a result, the press-fitting force required to press-fit the yokes 3 in the pipe 2 decreases.

The recesses 5a and the projections 5b are formed on the vertex of the teeth 4a. Therefore, when press fitting each yoke 3, one of the projections 5b located at the front side in the press-fitting direction cuts the inner surface of the pipe 2. Then, the projection 5b passes the cut portion and the following recess 5a passes the cut portion. After the recess 5a has passed the cut portion, the next projection 5b passes the cut portion cutting the cut portion again. That is, the teeth 4a of the serration 4 cut the inner surface of the pipe 2 little by little while proceeding so that the depth of the serration grooves increases. Thus, the squeezing force of the pipe 2 with respect to the serration 4 decreases, which decreases the frictional force.

The outer diameter of each serration 4 is greater than the inner diameter of the pipe 2. When the press-fitting force is great, the teeth 4a easily widen the inner circumferential surface of the pipe 2. Therefore, the pipe 2 is easily damaged during press-fitting. However, since the serration 4 is press-fitted with a small press-fitting force, the serration grooves 6 are formed while preventing the pipe 2 from being damaged. Further, the teeth 4a of the serration 4 of each yoke 3 is firmly engaged with the corresponding serration grooves 6. Thus, the pipe 2 and each yoke 3 are secured with great strength. One yoke 3 is secured to each end of the pipe 2 to form the propeller shaft 1.

The first embodiment provides the following advantages.
(1) The coupling portion 3a is located on one end of each yoke 3. The serration 4, which has teeth 4a, is formed on the outer circumferential surface of each coupling portion 3a. The teeth 4a can form grooves in the inner surface of the pipe 2 in the axial direction of the pipe 2. The recesses 5a and the projections 5b are continuously formed on the vertex of each tooth 4a in the longitudinal direction. Therefore, when each serration 4 is press-fitted in the pipe 2 while forming serration grooves 6, the frictional resistance between the serration grooves 6 and the teeth 4a is decreased. Also, since the cutting dust is accommodated in the recesses 5a, the cutting dust does not easily enter the space between the wall of the serration grooves 6 and the teeth 4a. This reduces the frictional resistance. As a result, the press-fitting force required to press-fit each yoke 3 in the pipe 2 is decreased. This facilitates the assembling procedure of the yokes 3.
(2) Since the recesses 5a and the projections 5b are shaped like saw-teeth, the tips of the projections 5b are sharp. This facilitates cutting of the serration grooves 6 in the pipe 2. As a result, the press-fitting force required to press-fit each yoke 3 is decreased, which facilitates the assembling of the yokes 3 to the pipe 2.
(3) The propeller shaft 1 is formed by press fitting each yoke 3, which is formed as above, to the circumferential surface of one of the end portions of the FRP pipe 2. Therefore, each yoke 3 can be press-fitted with a small press-fitting force. This suppresses damage on the pipe 2 caused during assembling. As a result, the teeth 4a of each serration 4 are firmly engaged with the inner circumferential surface of the pipe 2. This provides great coupling strength between the pipe 2 and each yoke 3. Also, the present invention differs from the case when the teeth of the serration is separated in the longitudinal direction providing portions having no teeth, in that the teeth 4a of each serration 4 contact the entire length of the serration grooves 6, which are formed in the inner circumferential surface of the pipe 2. Therefore, the required transmission torque is obtained without elongating each serration 4. When an axial load is applied on the yokes 3 to compress the yokes at the collision of the vehicle, the yokes 3 are depressed into the pipe 2 with a small force. Thus, the propeller shaft 1 is smoothly compressed or broken in the axial direction.
(4) The depth of the recesses 5a is less than the dimension of the portion that cuts into the inner circumferential surface of the end portion of the pipe 2. Therefore, compared to a case when the depth of the recesses 5a is greater than the dimension of the portion that cuts into the inner circumferential surface of the end portion of the pipe 2, the contact area between the teeth 4a and the wall of the grooves 6 is increased. Thus, the length of the serration needed for maintaining the required transmission torque is decreased.
(5) The serration 4 of each yoke 3 is processed using the topping hob. The teeth 4a and the recesses 5a, which are formed on the vertex of each tooth 4a, are simultaneously processed to continuously form the recesses 5a and the projections 5b on the vertex of each tooth 4a in the longitudinal direction.

Therefore, the teeth 4a of the serration 4 and the recesses 5a are processed in one procedure, which improves the productivity. Compared with a case, when processing narrow teeth tips without using the topping hob, the narrow teeth tips can be formed without requiring high accuracy.

It should be apparent to those skilled in the art that the present invention may be embodied in many other specific forms without departing from the spirit or scope of the invention. Particularly, it should be understood that the invention may be embodied in the following forms.

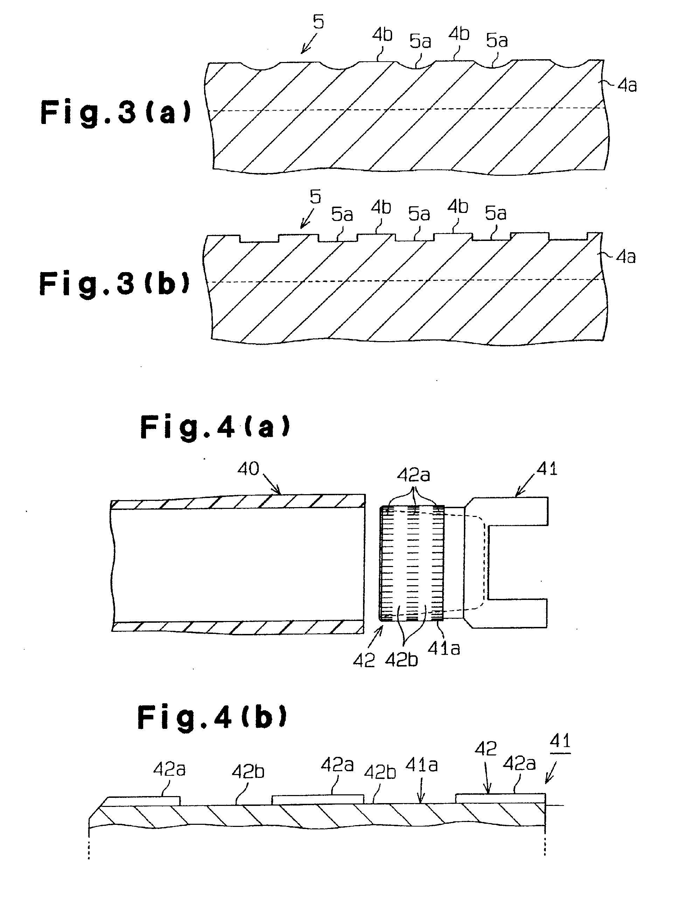

The recesses 5a and the projections 5b, which are formed on the vertex of each tooth 4a, need not be shaped like saw-teeth. For example, as shown in Fig. 3(a), recesses 5a, the cross-sections of which describe arcs, may be formed on the vertex of each tooth 4a at predetermined intervals such that a flat portion 4b axially extends between each recess 5a. As shown in Fig. 3(b), recesses 5a, the cross-sections of which are rectangular, may be formed on the vertex of each tooth 4a at predetermined intervals such that a flat portion 4b axially extends between each recess 5a.

The teeth 4a and the recesses 5a cannot be formed in one procedure using the topping hob for the above described shapes. Therefore, annular grooves, which extend in the circumferential direction, may be formed on the peripheral surface of the coupling portion 3a with a lathe first. Then, the teeth 4a are processed with a hob to form the serration 4. The teeth 4a may be formed with the hob first and the recesses 5a may then be processed with a lathe. The further embodiment provides the same advantages as described in (1), (3), and (4) of the preferred embodiment. Compared with the preferred embodiment, the contact area between the serration grooves 6 and the teeth 4a increases, thus improving the torque transmission efficiency. This adds to the flexibility of the design of the recesses 5a.

In the preferred embodiment, the topping hob is used for processing the recesses 5a and the projections 5b on the vertex of each tooth 4a of the serration 4. However, the recesses and the projections, which extend in the circumferential direction on the peripheral surface of the coupling portion 3a of each yoke 3, may be formed by cutting and rolling. After the recesses and the projections are formed, the serration 4 may be formed by cutting, grinding, or rolling using, for example, a hob, a gear shaper, or angular cutter. This adds to the flexibility of the design of the recesses 5a.

The recesses 5a having the depth of 0.01 to 0.1mm may be formed during surface finish before processing the serration. Then, the serration 4 may be formed.

After forming the serration by cutting and grinding using a hob, gear shaper, angle cutter, or the like, or rolling, forging (cold forging, hot forging), drawing, or the like, the recesses 5a may be formed on the vertex of each tooth 4a by cutting or rolling. This also adds flexibility to the design of the recesses 5a.

The shape of the recesses 5a is not limited to rectangular or arcuate but may be triangular, trapezoidal, or other shapes.

The cross-sectional shape of the FRP pipe need not be circular but may be triangular, rectangular or polygonal.

The method for manufacturing the FRP pipe is not limited to the filament winding method. For example, a sheet winding method may be applied. The manufacturing method is not limited as long as the FRP pipe is manufactured such that the characteristics required for using as a drive shaft is satisfied.

The coupling portion 3a of each yoke 3 is cylindrical in the preferred embodiment. However, the coupling portion 3a need not be cylindrical. For example, the coupling portion 3a may be columnar. However, the coupling portion 3a is preferably cylindrical in view of weight reduction and the strength.

The power transmission shaft is not limited to the propeller shaft 1. The present invention may be applied to other power transmission shafts. The coupling method according to the above embodiments may be applied.

The material of the pipe 2 is not limited to the FRP that uses carbon fiber as the reinforcing fiber and the epoxy resin as the matrix resin. For example, other fibers that are generally regarded as having high elasticity and high strength, such as aramid fiber and grass fiber, may be applied as the reinforcing fiber and other thermosetting resin, such as unsaturated polyester resin, phenol resin, or polyimide resin, may be applied as the matrix resin.

The matrix resin of the FRP need not be thermosetting resin. For example, ultraviolet curing resin or thermoplastic resin may be used as the matrix resin.

The tapered portion 2c includes one that the diameter changes continuously or the diameter increases stepwise toward the end of the pipe 2.

Therefore, the present examples and embodiments are to be considered as illustrative and not restrictive and the invention is not to be limited to the details given herein, but may be modified within the scope and equivalence of the appended claims.

A yoke (3) is secured to the inner surface of an FRP pipe (2). The yoke (3) has a first end and a coupling portion (3a) is located on the first end. The coupling portion (3a) has a peripheral surface and is secured to the inner surface of the pipe (2). A serration (4) is formed on the peripheral surface of the coupling portion (3a). The serration (4) has teeth (4a) that can form grooves, which axially extend along the inner surface of the pipe (2) when securing the yoke (3) to the pipe (2). Recesses (5a) are continuously formed on the vertex of each tooth (4a) in the longitudinal direction.

## Claims

1. A yoke (3) secured to the inner surface of an FRP pipe (2), the yoke (3) being **characterized by**:
a coupling portion (3a) located on the first end of the yoke (3), wherein the coupling portion (3a) has a peripheral surface and is secured to the inner surface of the pipe (2);
wherein a serration (4) is formed on the peripheral surface of the coupling portion (3a), wherein the serration (4) has teeth (4a), and wherein the teeth (4a) form grooves that extend axially along the inner surface of the pipe (2) when the yoke (3) is secured to the pipe (2); and
wherein a plurality of recesses (5a) is formed on the vertex of each tooth (4a) in the longitudinal direction.

2. The yoke according to claim 1, **characterized in that** the cross-sections of recesses (5a) describe arcs.

3. The yoke according to claim 2, **characterized in that** the depth of the recesses (5a) is 1 to 5 % of the pitch of the recesses (5a).

4. The yoke according to claim 1, **characterized in that** the pipe (2) is a part of a propeller shaft of a vehicle.

5. The yoke according to claim 1, **characterized in that** the cross-sections of the coupling portion (3a) and the pipe (2) are circular.

6. The yoke according to claim 1, **characterized in that** the plurality of recesses (5a) is continuously formed in the longitudinal direction.

7. The yoke according to claim 1, **characterized in that** the cross-section of each tooth (4a) is triangular, and wherein the vertex of each tooth (4a) is chamfered.

8. A power transmission shaft **characterized in that** the power transmission shaft includes the yoke according to any one of claims 1 to 7.

9. A method for manufacturing a yoke having a coupling portion (3a), wherein a serration (4) is formed on the peripheral surface of the coupling portion (3a), wherein the serration (4) includes teeth (4a), and wherein the teeth (4a) form grooves (6) that extend axially along the inner surface of an FRP pipe (2), the manufacturing method being **characterized by**:
forming recesses (5a) at the vertex of each tooth (4a) in the longitudinal direction simultaneously with the teeth (4a) using a topping hob.
